# EUROPÄISCHE PATENTANMELDUNG

(11) **EP 2 299 240 A2**
(43) Veröffentlichungstag der Anmeldung: **23.03.2011**
(21) Anmeldenummer: 10011986.6
(22) Anmeldetag: 31.07.2001
(51) Int. Cl.: G01C 3/00, G01B 11/14, G01S 11/12

(54) **Signalverarbeitungsschaltkreis für einen Lichtempfänger und Messsystem dafür**

(30) Priorität: 01.08.2000 DE 10037853; 29.11.2000 DE 10059240
(62) Teilanmeldung aus: 01958039.8
(71) Anmelder: AndroTec GmbH, 67714 Waldfischbach-Burgalben (DE)
(72) Erfinder: Essling, Mirko, 55606 Kellenbach (DE); Kasper, Michael, 67659 Kaiserslautern (DE); Jörg, Klaus, Werner, Dr., 67705 Stelzenberg (DE)
(74) Vertreter: Pietruk, Claus Peter

(57) **Zusammenfassung**

Die Erfindung betrifft einen Signalverarbeitungsschaltkreis für einen Lichtempfänger mit zumindest einer photoempfindlichen Komponente zum wiederholten Empfang eines Lichtstrahls. Hierbei ist vorgesehen, dass der Signalverarbeitungsschaltkreis dazu angepasst ist, ein Signal zu empfangen, das aus der photoempfindlichen Komponente hergeleitet ist, und den Empfang eines Lichtstrahls auf der photoempfindlichen Komponente zu bestimmen und einen Analog-Digital-Wandler zum Quantisieren eines von der photoempfindlichen Komponente hergeleiteten Signals auf zeit- und wertdiskrete Weise und zur Erzeugung eines darauf bezogenen digitalen Datenstroms umfasst, wobei der Signalverarbeitungsschaltkreis weiter dazu angepasst ist, Details des Strahlempfangs auf der photoempfindlichen Komponente aus dEm quantisierten Signal zu bestimmen.

## Beschreibung

Die vorliegende Erfindung betrifft die Oberbegriffe der unabhängigen Ansprüche. Damit befasst sich die Erfindung allgemein mit der Bestimmung von Entfernungen und/oder Positionen.

Es ist häufig erforderlich, vergleichsweise kurze Entfernungen im Bereich einiger Zentimeter bis zu einigen hundert Metern schnell und hochpräzise vermessen zu können. Anwendungen hierfür sind beispielsweise das Ausmessen bestehender Immobilien, die Vermessung von Grundstücken, beim Aufbau von Häusern, genauso wie die Entfernungsmessung von beweglichen Maschinen, beispielsweise Transportsystemen in Industriehallen, deren Abstand von Wänden oder dergl. bestimmt werden muss, um die Bewegung gegebenenfalls vor Kollisionen anzuhalten.

Darüber hinaus ist es oftmals nicht nur gewünscht, die Entfernung zu einem Referenzpunkt zu bestimmen, sondern auch eine relative Position zu diesem Bezugspunkt zu bestimmen, und zwar je nach Anwendung in zwei oder drei Dimensionen, d.h. typisch die Position auf einer Fläche bzw. zusätzlich noch die Höhe.

Es sind nun verschiedene Verfahren vorgeschlagen worden, um diesen Messaufgaben gerecht zu werden.

So schlägt beispielsweise die US PS 5,949,530 ein Verfahren vor, bei welchem ein gepulster Laserstrahl ausgesandt und die Entfernung zu einem entfernten Objekt aus der Laufzeit des rückgestreuten Impulses bestimmt wird. Systeme dieser Art finden bereits industrielle Anwendung, sind allerdings teuer, da die Laufzeiten der Lichtpulse kurz sind und eine hochfrequent arbeitende Auswerteelektronik erforderlich ist, die dementsprechend schnell ansprechen muss.

Weiter sind Anordnungen bekannt, bei welchen auf Messstrahlen Signale aufmoduliert werden und eine auf die Modulation bezogene Größe, z.B. die Phase, zur Bestimmung der Entfernung zum Messsender herangezogen wird.

Neben der beschriebenen Laufzeitmessung und der Phasenmessung bei geeignet moduliertem Laserlicht sind weitere Verfahren wie die aktive Triangulation bekannt, bei denen z.B. rückgestreutes Laserlicht mit einem positionsempfindlichen Detektor (PSD) erfasst wird, um aus der Position eines auf diesen Detektor abgebildeten Lichtpunktes auf die Entfernung zu den Objektpunkten zu schließen.

Es sind weiter Anordnungen bekannt, bei welchen ein Lichtsender exakt zur Vertikalen ausgerichtet wird, um dann einen Lichtstrahl längs einer horizontalen Linie oder ein Koordinatenkreuz als Referenz zu emittieren. Hiermit können Messungen erleichtert werden, nicht jedoch ohne weiteres vorgenommen werden.

Die Aufgabe der vorliegenden Erfindung besteht darin, Neues für die gewerbliche Anwendung bereitzustellen.

Die erfindungsgemäße Lösung dieser Aufgabe wird in unabhängiger Form beansprucht, bevorzugte Ausführungsformen finden sich in den Unteransprüchen.

Damit schlägt die Erfindung zunächst vor, dass bei einer Messanordnung mit einem Messender und einem messbar beabstandeten Messempfänger vorgesehen ist, dass der Messender zur Emission von zumindest zwei derart in vorgegebener Beziehung zueinander eine Fläche überstreichende Messsendestrahlen und der Messempfänger zum zeitaufgelösten Empfang von Messstrahlen ausgebildet ist, dass aus der Zeitsignatur des Messstrahlenempfangs die Sender-Empfãnger-Entfernung bestimmbar ist.

Ein erster wesentlicher Aspekt nutzt dabei, dass durch die vorgegebene Beziehung von zwei separaten Messstrahlen zueinander, die in vorgegebener Weise über eine Fläche bewegt werden, am Messempfänger eine Empfangs-Signatur erhalten wird, aus welcher auf die Entfernung zum Messsender geschlossen werden kann.

Das dadurch realisierte Messprinzip lässt sich, ohne die Erfindung auf diesen speziellen Fall beschränkt zu sehen, am besten für zwei parallel zueinander emittierte Laserstrahlen verstehen, die zusammen gleichmäßig um eine Achse rotieren, wobei die Rotationsachse senkrecht auf die durch die Laserstrahlen definierte Ebene stehen soll.

Ein Laserstrahl benötigt durch die gleichmäßige Rotation zunächst in jeder Entfernung zur Rotationsachse stets dieselbe Zeit, um einmal ganz umzulaufen. Die Länge des Umfangskreises, den der Laser bei einem vollständigen Umlauf überstreicht, wächst jedoch einleuchtender Weise mit der Entfernung von der Rotationsachse.

Nun ist bei paralleler Emission der Laserstrahlen ihr Abstand in jeder Entfernung von der Rotationsachse gleich. Dieser Abstand wird aber in größerer Entfernung von der Achse schneller überstrichen, da der Laserabstand ja entfernt von der Achse einen kleineren Bruchteil des Umfanges ausmacht. Die Zeit, die der zweite Laser benötigt, um die Position zu erreichen, an der zuvor der erste Laser erfasst wurde, sinkt damit, wenn der Abstand zur Achse wächst.

Dieses Messprinzip ist allerdings weder ausschließlich auf Laserlicht beschränkt, noch auf lediglich zwei, noch auf exakt parallel ausgerichtete Strahlen. Vielmehr lassen sich auch mit geneigt zueinander emittierten, windschiefen oder sich schneidenden Strahlen Messungen durchführen; auch ist es möglich, eine nicht gleichmäßige Rotation vorzusehen, etwa, um nicht-interessierende Bereiche schneller zu überstreichen oder um bei fester Installation des Messsenders, z.B. in einer Industriehalle bestimmte Bereiche mit erhöhter Auflösung erfassen zu können.

Es ist möglich, eine Reihe von unterschiedlichen Strahlen zu verwenden, z.B. Ultraschallstrahlen. Es ist aber bevorzugt, wenn als Messstrahlen Lichtstrahlen ausgesandt werden, da dies die Kontrolle und Justierung der Vorrichtung besonders einfach gestaltet. Besonders bevorzugt ist die Verwendung von Laserlichtstrahlen, da Laserlichtquellen verfügbar sind, diese preiswert sind und mit nur geringer Divergenz emittieren.

Die Messsendestrahlen können auf verschiedene Weise zum Überstreichen einer Fläche gebracht werden. Besonders bevorzugt ist es, wenn sie um eine Achse rotieren. Hierzu können die Lichtquellen auf einem Drehtisch angeordnet werden oder sie strahlen auf eine sich drehende Optik. In einem solchen Fall werden sich die Messsendestrahlen nicht an der Rotationsachse schneiden; die Auswertung der Signale vereinfacht sich, wenn zumindest zwei der Messsendestrahlen allgemein parallel zueinander emittiert werden. Allerdings ist es problemfrei möglich, auf andere Strahlgeometrien zu korrigieren.

In einer besonders bevorzugten Variante werden mehr als zwei Messsendestrahlen emittiert. Die Messsendestrahlen können als allgemeiner Messsendestrahlfächer emittiert werden, wobei zumindest die durch einen Einzelfächer aufgespannte Ebene zumindest eine Komponente parallel zur Rotationsachse aufweist und bevorzugt allgemein parallel zu dieser liegt. Dies erlaubt die Verwendung von Detektoren im Messempfänger, die nicht auf einer bestimmten Höhe angeordnet werden müssen, um ein Signal zu empfangen, auch wenn sie punktförmig ausgebildet sind. Obwohl auch eine fächerförmige Emission anderer Strahlen möglich ist, wird nachfolgend aus rein sprachlichen Gründen lediglich auf Lichtfächer Bezug genommen.

Es kann bevorzugt ein dritter Lichtfächer vorgesehen sein, der schräg zwischen zwei ihn umgebenden, allgemein rotationsachsparallelen Fächern verläuft. Die Zeit, die zwischen dem Durchgang der beiden allgemein rotationsachsparallelen Lichtfächer vergeht, hängt hier nur vom Abstand des Messortes zur Rotationsachse ab. Abhängig von der Höhe, in welcher die Signale der drei Fächer empfangen werden, variiert dann sowohl die Zeit, die zwischen Durchgang des ersten, allgemein rotationsachsparallelen und dem schrägem Lichtfächer vergeht, als auch die Zeit, die zwischen dem Durchgang des schrägen Lichtfächers und des zweiten, allgemein rotationsachsparallelen Lichtfächers vergeht; wächst die erste Zeit, nimmt die zweite Zeit entsprechend ab, und umgekehrt. Aus der Zeitauswertung läßt sich somit auf die Höhe schließen.

Es ist besonders bevorzugt, wenn die Messanordnung ein Mittel zur Bestimmung eines Messstrahl-Nullwinkeldurchgangs aufweist. Dies erlaubt die Bezugnahme auf eine Nullwinkelreferenzachse, was unter Heranziehung des Abstandes zur Rotationsachse einen Satz Polarkoordinaten an jedem Messpunkt bereitstellt.

Die Synchronisation auf den Nulldurchgang kann durch Modulation der Messstrahlen (z.B. Laserstrahlen) etwa mit einer Zeitinformation, durch Bezugnahme auf ein externes Zeitnormal wie ein DCF-Zeitsignal oder Netzbrummen und/oder Bezugnahme auf eine gemeinsame interne und/oder externe Zeit- beziehungsweise Taktreferenz geschehen.

Es kann auch ein Nullwinkelbezug unter einmaliger und/oder mehrfacher Synchronisation einer Empfängeruhr auf die Rotationsgeschwindigkeit der Lasereinheit und eine anschließende, kontinuierliche Zeitmessung generiert werden.

Es kann weiter eine insbesondere drahtlose Datenübertragungseinrichtung zum Austausch von Informationen zwischen den Einheiten vorgesehen sein, insbesondere der Zeitinformationen und/oder der Nullwinkeldurchgangsinformationen.

Es ist bevorzugt, wenn die Messanordnung weiter ein Mittel umfasst, um aus dem Abstand zum Messsender (r) und der Bezugnahme auf den Messstrahl-Nullwinkeldurchgang (phi) kartesische Koordinaten (x, y) zu bestimmen. Die Umrechnung kann im Messempfänger geschehen, um unmittelbar dort eine gegebene xy- und respektive z-Koordinate anzuzeigen.

Wenn die Zeitsignalauswertung zumindest teilweise im Messempfänger geschieht, ist es bevorzugt, wenn eine Vielzahl von Koordinaten darin speicherbar sind und/oder insbesondere auf eine Zentral- und/oder Datenweiterverarbeitungseinheit übertragen werden können.

Für den Messempfänger ist es bei Lichtstrahlen als Messsendestrahlen insbesondere bevorzugt, wenn er zumindest ein lichtempfindliches Element aufweist, welches Licht aus einem Lichtleiter empfängt, wobei dessen Oberfläche zur Einkopplung von auf die Mantelfläche auftreffendem Licht insbesondere durch Streuung ausgebildet sein kann.

Besonders bevorzugt ist es, wenn auf beiden Enden des Lichtleiters ein Lichtsensor vorgesehen ist; dann erhält man wahlweise eine Redundanz und erhöhte Versagenssicherheit und/oder die Möglichkeit, aus einem Signalstärkenvergleich an erstem und zweitem Lichtsensor auf die Auftreffstelle eines in den Lichtleiter eingestreuten Lichtstrahles zu schließen. Dies kann, bekannte Höhe der Empfänger über Grund vorausgesetzt, etwa bei Montage auf fahrbaren Robotern und/oder für Nivellierarbeiten am Bau zu Höhenbestimmungen verwendet werden.

In alternativer Weise ist es möglich, anstelle zweier oder mehrerer bewegter Messsendestrahlen, die in vorgegebener räumlicher Beziehung zueinander emittiert werden, einen Messempfänger mit integrierten mehreren, in festem Abstand zueinander stehenden Messsendestrahldetektoren zu verwenden, wobei gleichfalls aus dem Zeitverlauf der nun durch den wenigstens einen Messsendestrahl auf den unterschiedlichen Messsendestrahldetektoren erzeugten Signale auf einen Abstand zu einem Referenzpunkt geschlossen werden kann. Auch hier wird die Idee genutzt, dass eine gegebene Winkelgeschwindigkeit abhängig vom Abstand zur Rotationsachse zu mit dem Radius variierenden Überstreichzeiten führt. Es ist hierbei bevorzugt, wiederum stabförmige Lichtempfänger, z.B. Lichtdetektoren an Lichtleitern zu verwenden, in welche durch Einstreuung Licht eingekoppelt werden kann. zugleich werden bevorzugt wenigstens drei solcher Lichtleiter verwendet. Dies ermöglicht es, eine Schräghaltung des Messempfängers zu erfassen und zu kompensieren. Eine Schräghaltung durch Verdrehen gegen die Tangente des überstrichenen Kreises kann dabei insbesondere dann angenommen werden, wenn die bei äquidistant angeordneten Messstrahldetektoren die Empfangszeitdifferenzen vom ersten zum zweitem Messstrahldetektor und von zweiten zum dritten signifikant voneinander abweichen. Eine Schräghaltung gegen die Rotationsachse kann hingegen erfasst werden, wenn die einzelnen Messstrahldetektoren höhenempfindlich sind, z.B. durch positionsempfindliche Detektoren (PSDs) und/oder beidseits intensitatsabgetastete Lichtleiter, in welche Licht durch Streuung eingekoppelt werden kann. Es ist auch vorteilhaft, bei Verwendung von mehreren Messsendestrahlen zugleich mehrere, etwa zwei, Messempfänger beabstandet voneinander vorzusehen; mit diesen kann bevorzugt die Orientierung eines Objektes, an dem sie angeordnet sind, im Raum bestimmt werden.

Die Erfindung wird im folgenden nur beispielsweise anhand der Zeichnungen beschrieben. In dieser zeigt/zeigen:
- Fig. 1: eine Skizze zur Veranschaulichung einer erfindungsgemäßen Messanordnung;
- Fig. 2 a: eine erste Prinzipskizze zur Veranschaulichung der Auswerteelektronik einer erfindungsgemäßen Messanordnung;

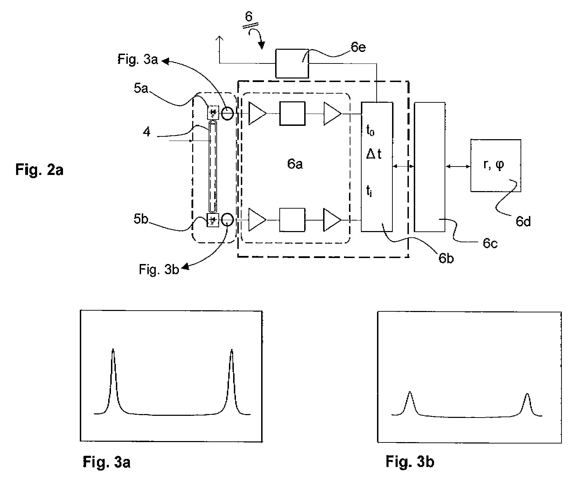

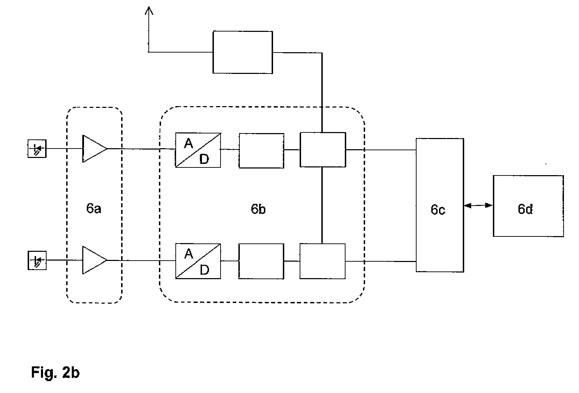

- Fig. 2 b: eine zweite Prinzipskizze zur Veranschaulichung mit einer alternativen Auswerteelektronik einer erfindungsgemäßen Messanordnung;
- Fig. 3a,b: Signale an den beiden Dioden des Messempfängers;

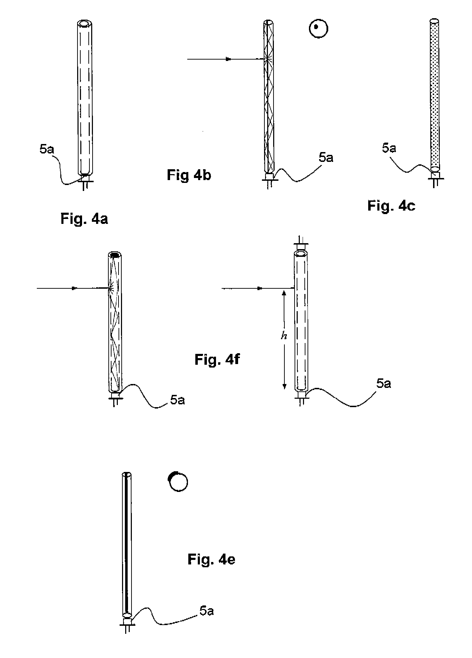

- Fig. 4: ein Detail eines Messempfängers;

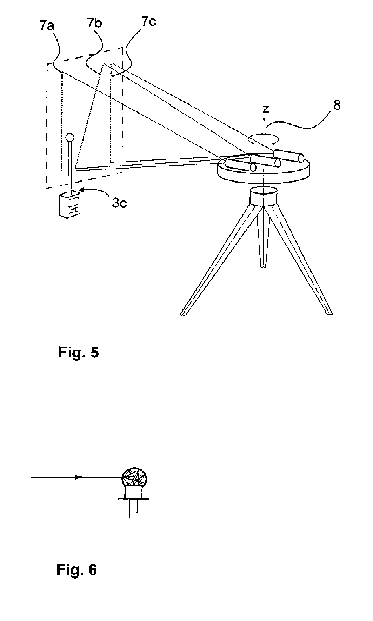

- Fig. 5: eine Prinzipskizze einer weiteren erfindungsgemäßen Messanordnung;
- Fig. 6: Details von Messempfängern;

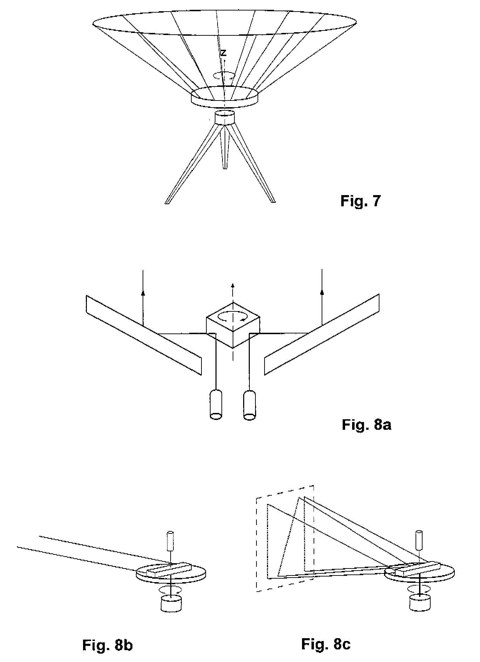

- Fig. 7: eine alternative Abstrahlgeometrie;
- Fig. 8: verschiedene Varianten zur erfindungsgemäßen Ausbildung des Messsenders;

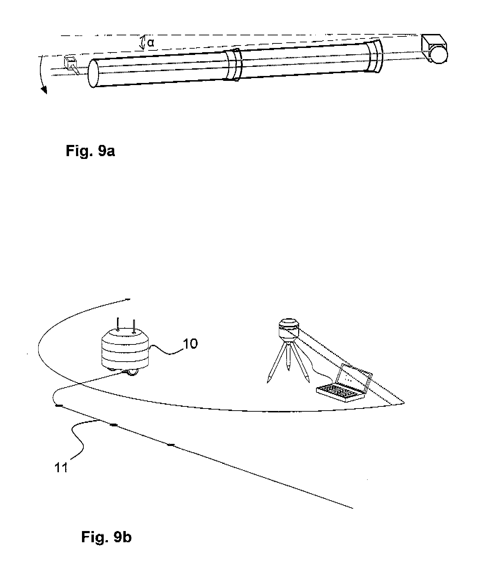

- Fig. 9: Beispiele für Anwendungen;

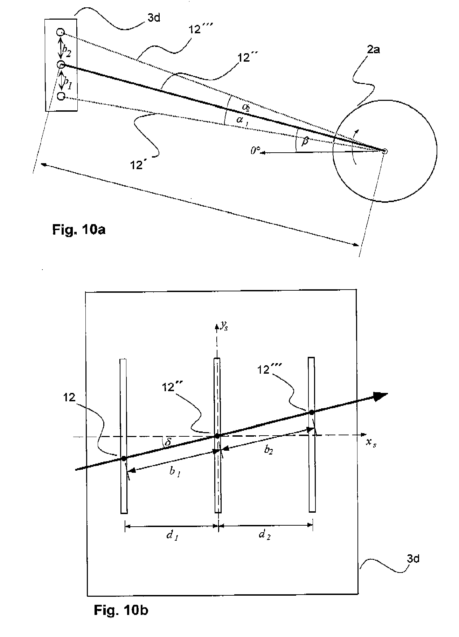

- Fig.10: eine weitere Variante.

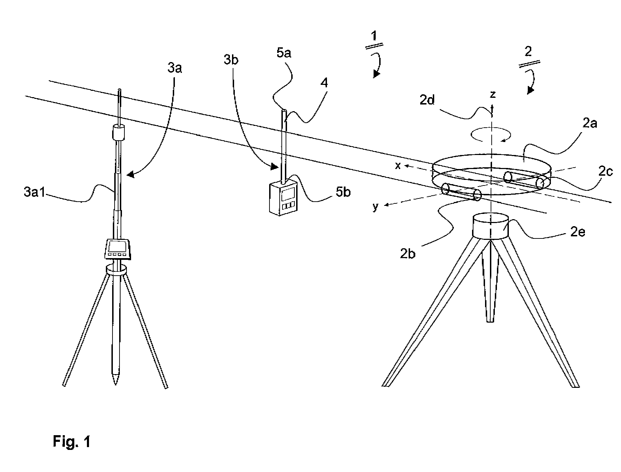

Nach Fig. 1 umfasst eine allgemein mit 1 bezeichnete Messanordnung zur lokalen Positionsbestimmung einen Messsender 2 und mehrere messbar davon beabstandete Messempfängers 3a, 3b.

Der Messsender 2 umfasst eine Plattform 2a, auf der zwei Laserlichtquellen 2b, 2c zur Emission von allgemein parallelen Messsendestrahlen angeordnet sind. Die Laser 2b, 2c sind gemeinsam mit der Plattform 2a durch einen Antrieb 2e mit geregelter, konstanter Geschwindigkeit um eine Rotationsachse 2d drehbar, die allgemein vertikal verläuft und senkrecht auf die allgemein parallelen Laserstrahlen steht. Nicht dargestellt ist ein Funksignalgeber, der ein auf den Zeitpunkt tₒ eines Nullwinkeldurchgangs bezogenes Signal abstrahlt.

Der erste Messempfänger 3a ist ein Standmessempfänger, während der zweite dargestellte Messempfänger 3b ein Handmessempfänger ist. Prinzipiell ist es möglich, praktisch beliebig viele Empfänger gleichzeitig einzusetzen. Die beiden Messempfänger 3a, 3b haben 360º-Charakteristiken, können also aus allen Richtungen Licht empfangen. Sie umfassen einen Lichtleiter 4, dessen Oberfläche mit einer streuenden Beschichtung versehen ist und an jedem Ende des Lichtleiters eine Photodiode 5a, 5b als lichtempfindliches Bauelement aufweist Der Messempfänger 3 umfasst auch einen Funkempfänger (vgl. Fig. 2a), Bezugszahl 6e), der zum Empfang des vom Messsender abgestrahlten, auf den Nullwinkeldurchgang bezogenen Signals ausgebildet ist.

Von den Photodioden 5a, 5b führen Signalleitungen zu einer Signalverarbeitungsschaltung 6 (Fig. 2a), die dazu ausgebildet ist, die Signale erst zu verstärken und so zu konditionieren, dass sich ein Zustand, in welchem ein Messsendestrahl in den Lichtleiter eingekoppelt wird, erkennen und hinsichtlich seiner zeitlichen Lage tᵢ relativ zum Zeitpunkt des Nullwinkeldurchgangs tₒ erfassen lässt. Die Signalverarbeitungsschaltung 6 ist weiter dazu ausgelegt, die Zeitdifferenz Δt (vgl. Fig. 3) von aufeinander folgenden Photodiodenpulsen zu bestimmen und daraus weitere Informationen herzuleiten (vgl. Zeitmesseinrichtung 6b). Dazu ist eine Umrechnungsstufe 6c vorhanden, die dazu ausgebildet ist, aus der zeitlichen Lage tᵢ der jeweiligen Photodiodenimpulse eine Winkelkoordinate ₉ relativ zum Nullwinkeldurchgangszeitpunkt tₒ zu bestimmen und zur Ausgabestufe 6d auszugeben, und die weiter dazu ausgebildet ist, aus der Zeitdifferenz Δt eine Entfernung vom Messsender zu bestimmen. Die Ergebnisse aus der Umrechnungsstufe 6c werden an eine Ausgabestufe 6d gegeben, mit der das Ergebnis lokal auf einer Anzeige angezeigt werden kann.

Die Anordnung von Fig.1 wird benutzt wie folgt:

Zunächst wird der Antrieb 2e erregt, bis die gewünschte konstante Geschwindigkeit um die Rotationsachse 2d eingeregelt ist. Dann werden die Messender 2 erregt. Dies erzeugt Impulse in den Photodioden 5 des Messempfängers 3b, wenn diese von den Sendestrahlen getroffen werden. Diese zu den Impulsen gehörenden Signale werden verstärkt und konditioniert.

Nun wird mit dem Messempfänger 3b die zeitsignatur des Messsignalempfangs bestimmt. Es wird zunächst der zeitliche Abstand der erfassten Signale bestimmt und daraus der Abstand zwischen Messempfänger und Rotationsachse bestimmt.

Es wird hierzu ausgenutzt, dass ein Laserstrahl durch die gleichmäßige Rotation zunächst in jeder Entfernung zur Rotationsachse stets dieselbe Zeit benötigt, um einmal ganz umzulaufen, zugleich aber die Länge des Umfangskreises, den der Laser bei einem vollständigen Umlauf überstreicht, mit der Entfernung von der Rotationsachse wächst. Da bei paralleler Emission der Laserstrahlen ihr Abstand in jeder Entfernung von der Rotationsachse gleich ist, wird dieser Abstand aber in größerer Entfernung von der Achse schneller überstrichen, da der Laserabstand ja entfernt von der Achse einen kleineren Bruchteil des Umfanges ausmacht. Die Zeit, die der zweite Laser benötigt, um die Position zu erreichen, an der zuvor der erste Laser erfaßt wurde, sinkt damit, wenn der Abstand zur Achse wächst. Eine auf den reziproken Wert bezogene Größe ergibt daher einen den Abstand zur Rotationsachse charakterisierenden Wert.

Deshalb wird zunächst eine zum zeitlichen Abstand der erfassten Signale reziproke Größe errechnet und dann unter Heranziehung einer, die geometrische Anordnung der emittierten Messsendestrahlen und der festen Rotationsfrequenz beschreibenden Größe der Abstand zur Rotationsachse bestimmt.

Die Zeitdifferenz Δt wird dabei zu einer Entfernung vom Messsender in einer Umrechnungsstufe 6c umgerechnet und an die Ausgabestufe 6d gegeben, die das Ergebnis lokal auf einer Anzeige anzeigt.

Aus der zeitlichen Lage tᵢ der jeweiligen Photodiodenimpulse wird dann die Winkelkoordinate ϕ relativ zum Nullwinkeldurchgangszeitpunkt tₒ bestimmt und bei 6d ausgegeben.

Es sei erwähnt, dass die Lichtleiter 4 am Messempfänger 3 auf unterschiedliche Weise für die Lichteinkopplung ausgebildet werden können. Dies ist in Fig. 4 dargestellt.

In Fig. 4a ist ein Lichtleiter abgebildet, dessen Oberfläche mit einer streuenden Beschichtung versehen ist und an dessen unteren Ende eine Photodiode vorgesehen ist.

Alternativ zeigt Fig. 4b die Verwendung einer Streuseele im Innern des Lichtleiters bzw. Hohlleiters. Der Strahlengang ist skizziert. Der in Fig. 4c dargestellte Lichtleiter verwendet Streupartikel zur Einstreuung des Laserlichts. Bei dem in Fig. 4d gezeigten Lichtleiter dient eine an einem Ende angebrachte Reflexionsschicht der Signalverstärkung insbesondere bei längeren Lichtleitern. Fig. 4e zeigt im Gegensatz zu Fig. 4a eine partiell flächendeckende Streuschicht. Hierbei wird das Licht bevorzugt von der der Streufläche gegenüberliegenden Seite durch den Lichtleiter hindurch eingekoppelt.

Fig. 4f zeigt eine besonders bevorzugte Variante eines Lichtempfängers, der durch die Verwendung zweier Photodioden an beiden Enden des Lichtleiters eine Bestimmung der Lage des Auftreffpunktes der Laserstrahlen ermöglicht. Der Lichtempfänger nach Fig. 4f wird dabei für den Standmessempfänger 3a (vgl. Fig. 1) verwendet, da hierdurch in Verbindung mit der messbaren Auslenkung einer integrierten Teleskopmesslatte 3al, eine Höhenmessung (Nivellement) möglich ist.

Das Ausführungsbeispiel von Fig. 5 zeigt eine Weiterbildung der vorgehend beschriebenen Erfindung zur Bestimmung dreidimensionaler Koordinaten. Zunächst werden abweichend zum vorherigen Ausführungsbeispiel keine Lichtstrahlen emittiert, sondern Lichtfächer 7a, 7b, 7c. Die beiden Randfächer 7a, 7c liegen dabei allgemein parallel zueinander und zur Rotationsachse 8; der mittlere Lichtfächer ist gegen die beiden Lichtfächer 7a, 7c geneigt. Die Plattform ist wiederum mit einer Nullwinkelreferenz versehen, die bei jedem Überstreichen eines willkürlich festgelegten Nullwinkels ein zusätzliches Funk-Signal an den Messempfänger 3c ausgibt. Der Messempfänger 3c weist eine zumindest im wesentlichen punktförmige Lichteinkoppelfläche auf, vgl. Fig. 6.

Mit dieser Anordnung können dreidimensionale Koordinatenbestimmungen wie folgt durchgeführt werden: Zunächst wird wie zuvor die Zeitsignatur des Messsignalempfangs bestimmt und aus dem Abstand des Durchgangs der beiden äußeren Lichtfächer auf die Entfernung zur Rotationsachse geschlossen. Wie zuvor wird durch Bezugnahme auf das Feststellen des Überstreichens des Nullwinkeldurchgangs, wie gemäß Funk-Signal übertragen, die Winkelposition des Messempfängers 3c relativ zum willkürlichen Nullwinkel bestimmt. Ergänzend wird nun noch bestimmt, in welchem Verhältnis der Zeitraum zwischen dem Durchgang der beiden äußeren Lichtfächer durch den mittleren, schräg geneigten geteilt wird. Es ist unmittelbar einsichtig, dass dieses Verhältnis für die Höhe repräsentativ ist (bei gegebenem Radius), die als Koordinate z errechnet wird. Es wird so ein Satz Koordinaten r, phi, z bestimmt. Diese Zylinderkoordinaten werden dann in kartesische umgerechnet.

Während nach dem Beispiel von Fig. 1 die Laserstrahlen allgemein senkrecht zur Rotationsachse emittiert wurden, ist dies nicht zwingend erforderlich. Vielmehr ist es auch möglich, eine kegelförmige Emission anstelle einer ebenen zu wählen, wie in Fig. 7 gezeigt.

Während vorhergehend beschrieben wurde, dass die Laser selbst als Messsendestrahlquellen gedreht werden, ist dies nicht zwingend erforderlich. Vielmehr ist es auch denkbar, den Laserstrahl auf einen drehbaren Spiegel oder dergl. zu richten, vgl. Fig. 8a. Bei Drehung eines Polygons wandern zwar die Strahlen etwas auseinander, was bei der Auswertung kompensierbar ist, es lassen sich aber sehr hohe Geschwindigkeiten erzielen. Weiter ist es möglich, anstelle einer vollständigen Rotation von Lasern und/oder drehbaren optischen Elementen lediglich ein Überstreichen einer bestimmten Fläche, etwa durch periodisches Hin- und Herschwenken vorzusehen.

Es ist wie in Fig. 8b,c gezeigt auch möglich, einen einzigen Laserstrahl durch eine Strahlteileranordnung insbesondere auf der Plattform bei der Rotationsachse in mehrere Messsendestrahlen zu teilen.

Die Messanordnung kann beispielsweise in einer ihrer Ausgestaltungen eingesetzt werden bei autonomen mobilen Robotern, bei fahrerlosen Transportsystemen, bei Robotikanwendungen oder zur Maschinensteuerung, oder in der konstruktiven Vermessungstechnik und ersetzt und/oder ergänzt dort herkömmliche elektronische Maßbänder, wie Laser- oder Ultraschallentfernungsmesser, feststehende oder rotierende Nivellierlaser, insbesondere auch Nivellierlaser mit einstellbarer Neigung (z.B. Rotationslaser mit zwei Neigungsachsen, Kanalbaulaser), optische Nivellierinstrumente, insbesondere Digitalnivellierinstrumente, optische und/oder elektronische Theodolite und Totalstationen. Weiter ist es möglich, die erfindungsgemäße Messanordnung einzusetzen zum Einmessen und Abstecken von Gebäudegrundrissen bei Neubauten (Erstellen von Schnurgerüsten, für Vermessungsarbeiten am Rohbau, beispielsweise zur Kontrolle der plangemäßen Bauausführung (Maßhaltigkeit) sowie zur Flächenberechnung, zum Aufmessen von bestehenden Gebäuden zur nachträglichen Flächenberechnung bzw. zur Überprüfung einzelner Maße eines Gebäudes, für manuelles Übertragen von Plandaten (insbesondere CAD-Daten) auf einen Untergrund (Boden, Wand, Decke) für Baugewerbe, Industrie, Landschaftsbau, Messebau, usw., Einmessen von Markierungen bei Sportveranstaltungen, Ausmessen erzielter Weiten bei Sportveranstaltungen beispielsweise in den Disziplinen Speerwurf, Hammerwurf, Kugelstoßen, Weitsprung, usw., Vermessung / Konstruktion von Fahrzeugen (Schiffen, Flugzeugen, etc.), Einsatz als Trackingsystem für Virtual Reality-Systeme, insbesondere auch für sogenannte virtuelle Studios, im Kanalbau, etwa zur Rohrverlegung (Fig. 9a).

Weiter ist es möglich, die Generierung von Umweltmodellen für mobile Robotikanwendungen zu unterstützen. Eine weitere Anwendung ist die Positionsbestimmung mobiler Serviceroboter. Insbesondere für alle Arten der flächendeckenden Bodenbearbeitung, beispielsweise Gebäudereinigung, Rasenpflege, Verlegung von Bodenfliesen, Minensuche (humanitarian demining), usw.

Eine besonders bevorzugte Variante sieht vor, dass ein mobiles System einerseits mit einer Messanordnung und andererseits mit einem Markierungsgeber versehen ist, der bestimmte Positionen ansteuert und bei deren Erreichen Markierungen setzt, zum Beispiel um CAD-Gebäudepläne 1:1 zu übertragen, vergleiche Fig. 9b. Hierbei wird wiederholt die Ist-Position eines fahrbaren Roboters 10 bestimmt, es werden dann unter Berücksichtigung derselben Sollpositionen angefahren - und auf diese Markierungen 11 gesetzt wie erforderlich.

Es sei darauf hingewiesen, dass sich durch die Verwendung mehrerer Messsender sowohl die Flächenabdeckung als auch die Messgenauigkeit erhöhen lässt. Weiter sei ausgeführt, dass ein Gesamtsystem aus einem oder mehreren Messsendern und einem oder mehreren Empfangsgeräten (Positionsdetektoren) bestehen kann, wobei nahezu beliebig viele Empfänger gleichzeitig eingesetzt und unabhängig voneinander betrieben werden können, solange die direkte Sichtverbindung zwischen der Scannereinheit und einem Empfänger für eine ausreichende Zahl von Strahlen, üblicherweise zwei, erhalten bleibt. Unabhängig von der einzelnen Anwendung kann dabei eine Vielzahl von Empfängern gleichzeitig bedient werden, so dass manuelles Vermessen durch mehrere Mitarbeiter oder die Steuerung mehrerer Maschinen gleichzeitig möglich werden, was in Industriehallen vorteilhaft ist, um fahrerlose Transportsysteme zu leiten. Hieraus resultiert ein erheblicher Zeitgewinn und eine erhebliche Kostenersparnis, weil gleichzeitig nur eine einzige Feststation benötigt wird und im Gegensatz zu dem Einsatz von Theodoliten lediglich die relativ preiswerten Empfänger mehrfach vorhanden sein müssen.

Die Formen der möglichen Empfangsgeräte reichen von einfachen x/y-Displays mit Einknopfbedienung bis hin zu komfortablen Messlatten mit integrierten Kleincomputern, sog. Personal Digital Assistant - PDAs, welche Softwareschnittstellen zu verbreiteten CAD-Programmen bieten.

Weil die Messgenauigkeit in größeren Entfernungen vor allem durch die zeitliche Auflösung der Messung des Abstands zwischen den Impulsen bestimmt wird, kann die Genauigkeit durch Mehrfachmessungen und anschließende Mittelwertbildung erhöht werden. Dies ist auch bei Luftturbulenzen usw., insbesondere für Messungen in großer Entfernung vom Messsender, vorteilhaft zur Messwertverbesserung.

Der Nullwinkeldurchgang kann von dem Empfänger anders als vorstehend beschrieben auch durch einmalige Synchronisation einer Empfängeruhr auf die Rotationsgeschwindigkeit der Lasereinheit und eine anschließende, kontinuierliche Zeitmessung generiert werden.

Es kann eine insbesondere drahtlose Datenübertragungseinrichtung zum Austausch von Informationen zwischen den Einheiten vorgesehen sein.

In den Empfängern können LCD-Anzeigen oder ähnliches vorgesehen sein, um die Position unmittelbar anzuzeigen.

Es sei darauf hingewiesen, dass die an den Messempfängern vorgesehenen Lichtleiter, in welche durch Streuung Licht seitlich eingekoppelt wird und/oder bei welchen auf beiden Enden des Lichtleiters ein lichtempfindliches Element vorgesehen ist, auch unabhängig von der Verwendung der erfindungsgemäßen Anordnung Vorteile bieten. Diese Anordnung läßt sich insbesondere für die Höhenmessung anwenden, auch mit herkömmlichen Rotationslasern.

Eine weitere Variante der Messanordnung ist in Figur 2b dargestellt. Bei dieser wird, zur besseren Bestimmung des Auftreffens des Laserstrahls auf den Messempfänger das von der Photodiode erhaltene Signal nach Verstärkung durch einen Analog-/Digitalwandler zeit- und wertdiskret quantisiert und am erhaltenen digitalen Datenstrom der Schwerpunkt des bei Sendestrahldurchgang erhaltenen Signals algorithmisch bestimmt, um den Strahldurchtritt auf diesen Schwerpunktsdurchtritt festzulegen. Indem der Durchtritt des Schwerpunktes als Strahldurchtrittszeitpunkt festgelegt wird, kann die zeitliche Präzision der Bestimmung erhöht werden; insbesondere ist eine Präzision besser als durch die Abtastrate vorgegeben möglich.

Es ist weiter die dargestellte Variante dazu angeordnet, am digitalen Datenstrom eine digitale Signalkonditionierung z.B. in Form einer Offsetanpassung und/oder unter Verwendung einer Bewertungs-(Gewichtungs-)Funktion, z.B. einer Randlagenabschwächung vorzunehmen, um eine noch weiter verbesserte Erfassung des zeitlichen Strahldurchgangs zu erhalten. Es sei darauf hingewiesen, dass es zur Messung bei geringen Signalpegeln möglich ist, eine Laserstrahlmodulation am Messsender vorzunehmen. Falls gewünscht, kann die erforderliche Demodulation im Empfänger, hinreichend hohe Abtastraten bei der Quantisierung vorausgesetzt, in einer digitalen Demodulationseinheit erfolgen.

Eine Erfindungsvariante mit nur einem Strahl wird mit Bezug auf Fig. 10. beschreiben.

Die in Fig. 10a gezeigte Messanordnung erlaubt dabei eine zweidimensionale Positionsbestimmung mit einem einzigen Messstrahl. Der von dem Messsender senkrecht zu dessen Drehachse emittierte, gerichtete Messsendestrahl überstreicht im Laufe einer Umdrehung einen Messempfänger 3d, der mit drei Stabsensoren nach Fig. 4f ausgestattet ist. Die Stabsensoren stehen parallel zur Rotationsachse. Der Messsendestrahl ist hierbei kollimiert und nicht fächerförmig aufgeweitet.

Als Rohdaten fallen zunächst aus der Zeitsignatur des Signalempfangs die Winkel beta, alpha1 und alpha2 an, wobei alpha1 und alpha2 durch Messung der Zeitabstände zwischen den Impulsen der Messstrahldetektoren bestimmt werden und beta durch Bestimmung der Zeitdifferenz zwischen dem Mess-Impuls an einem Detektor (bevorzugt des mittleren) und dem Nullwinkel-Referenzsignal.

Auf eine nicht parallele Haltung des Messempfängers zur Rotationsachse kann gemäß Fig. 10b kompensiert werden. Fig. 10b zeigt die Draufsicht auf die aktive Seite des Messstrahlempfängers 3d. Dabei sind die drei Messstrahldetcktoren parallel und mit den Abständen d1 und d2 in einer Ebene angeordnet. Der Strahl überquert den Messstrahlempfänger auf einer um den Winkel delta verkippten Bahn, so daß der Auftreffpunkt jeden Lichtleiter in unterschiedlichem Verhältnis teilt. Um nun die Auftreffpunkte des Messstrahls im lokalen Koordinatensystem (xs,ys) des Messempfängers bestimmen zu können, muß diese eindimensionale Höheninformation der Stabsensoren ausgewertet werden. Dies kann durch Auswertung der Signalstärken an den beiden endseitigen Photodioden jedes Lichtleiters geschehen. Da die Abstände d1, d2 bekannt sind, können nun die für die Bestimmung des Abstandes r benötigten Basisabstände b1 und b2 errechnet werden. Aus alpha1 und alpha2 und den Basisabständen kann so der Abstand r berechnet werden.

Anstelle der Lichtleiterkonfiguration sind auch andere Sensoren, wie z.B. PSDs einsetzbar.

Eine Messanordnung gemäß Figur 10 erlaubt generell neben der Bestimmung des Abstandes r und des Winkels beta auch eine Höhenmessung in Bezug auf die durch die rotierenden Messstrahlen aufgespannte Ebene im Erfassungsbereich der Lichtleiter/PSDs.

Weiter ist es möglich, auch die Bestimmung des Polarkoordinatenwinkels beta vorzunehmen ohne auf die Übertragung einer winkelreferenz Bezug zu nehmen; dabei kann dennoch die exakte Position des Messempfängers relativ zu einem Messsender bestimmt werden, und zwar in wenigstens zwei Koordinaten (r, phi). Dazu wird ein Messsender mit nahezu konstanter Drehzahl verwendet, bei dem es sich auch beispielsweise um einen preiswerten, per se bekannten rotierender Nivellierlaser handeln kann. Es wird zunächst mit dem in Figur 10 gezeigten Messsender an einer ersten Stelle eine Messung ausgeführt. Dann wird der Messsender um eine bekannte Strecke versetzt und eine neuerliche Messung mit dem Messempfänger an derselben Stelle durchgeführt. Die bekannte Strecke muss nur hinsichtlich ihrer Länge bekannt sein, was ohne weiteres aus der Zeitsignatur am Messempfänger, der auf den vorherigen oder gewünschten zweiten Ort des Messsenders versetzt wird, erfasst werden kann. Die Bestimmung der Polarkoordinaten erfolgt dann durch per se bekannte Trilateration. Vor dem Versetzen des Messsender können unter Speicherung der Einzelmesswerte Messungen an mehreren Stellen durchgeführt werden, wobei für diese die Messungen nach Versetzen des Messsenders wiederholt werden, um so die Positionen der Messstellen insgesamt bestimmen zu können.

In alternativer Weise ist es möglich, von vornherein zwei Messsender einzusetzen. Dies ist insbesondere dann möglich, wenn beide Messsender am Empfänger unterschieden werden können. Dies kann durch unterschiedliche Rotationsfrequenzen, Codierung der emittierten Signale, Wahl eines geeigneten Emmisionsspektrums und dergleichen erfolgen. Der Abstand beider Messsender, die willkürlich zueinander aufgestellt werden, wird dann ermittelt, indem beispielsweise auf der Verbindungslinie zwischen den Messsendern eine Messung mit dem Messempfänger vorgenommen wird.

In einer besonders bevorzugten Variante sind im Messempfänger Inertialsensoren, das heißt Trägheitssensoren vorgesehen, mit denen eine Bewegung des Messempfängers erfasst werden kann. Hintergrund ist insbesondere, dass, insbesondere bei Messungen im Freien über weite Strecken, etwa aufgrund der Luftturbulenzen refraktionsbedingte Messungenauigkeiten von Messung zu Messung auftreten können. Wenn erfasst wird, ob und/oder wieweit sich der Messempfänger zwischen zwei Messungen bewegt hat, ist es möglich, eine messgenauigkeitserhöhende Mittelung vorzunehmen. Dies kann auch unter Berücksichtigung unter Bewegung aufgenommener Messwerte geschehen. Werden Messwerte gespeichert, die während der Bewegung an dem Messort erfasst wurden, so kann unter Auswertung der mit den Trägheitssensoren oder dergleichen bestimmten Trajektorien die Messgenauigkeit durch Berücksichtigung von Werten, die während der Bewegung um den oder zum Messpunkt erfasst wurden, erhöht werden. Anstelle der Inertialsensoren können andere Bewegungssensoren zur Erfassung von Bewegungen, Ausrichtung und/oder Beschleunigung vorgesehen sein. Es ist einsichtig, dass bei vorsehen derartiger Sensoren auch auf die Bewegung des Messempfängers während einer Messung kompensiert werden kann.

Beschrieben wird demnach eine Messanordnung mit einem Messsender und zumindest einem messbar beabstandeten Messempfänger, wobei vorgesehen ist, dass der Messsender zur Emission von zumindest zwei in bestimmter Beziehung zueinander eine Fläche überstreichende Messsendestrahlen und der Messempfänger zum zeitaufgelösten Empfang von Messstrahlen ausgebildet ist, um aus der Zeitsignatur des Messstrahlenempfangs die Sender-Empfänger-Entfernung bestimmbar zu machen.

Es ist bevorzugt, wenn vorgesehen ist, dass als Messsendestrahlen Lichtstrahlen ausgesandt werden.

Es ist weiter bevorzugt, wenn überdies vorgesehen ist, dass als Lichtstrahlen Laserlichtstrahlen ausgesendet werden.

Es ist darüberhinaus bevorzugt, wenn weiter vorgesehen ist, dass die Messsendestrahlen um eine gemeinsame Achse rotieren.

Weiterhin ist bevorzugt, wenn zudem vorgesehen ist, dass die Messsendestrahlen sich nicht an der Rotationsachse schneiden.

Darüberhinaus ist bevorzugt, wenn weiter vorgesehen ist, dass die Strahlachsen der Messsendestrahlen in einer festen, insbesondere konstanten Winkelbeziehung zueinander stehen.

Es ist darüberhinaus bevorzugt, wenn weiter vorgesehen ist, dass zumindest zwei der Messsendestrahlen allgemein zueinander parallel verlaufen.

Es ist zudem bevorzugt, wenn darüber hinaus vorgesehen ist, dass wenigstens drei Messsendestrahlen vorgesehen sind.

weiter ist bevorzugt, wenn vorgesehen ist, dass der Messender zur Emission zumindest eines Messsendestrahls als allgemeiner Messsendestrahlfächer ausgebildet ist.

Zudem ist bevorzugt, wenn weiter vorgesehen ist, dass zwei der Messsendestrahlfächer zumindest allgemein parallel zueinander angeordnet sind.

Darüberhinaus ist bevorzugt, wenn ein dritter Messsendestrahlfächer so vorgesehen ist, dass er schräg zu den beiden beabstandeten, vorzugsweise allgemein parallelen Messsendestrahlfächern ausgerichtet ist und in einer zur Rotationsachse geneigten, jedoch nicht senkrechten Ebene angeordnet ist.

Weiter ist die Ausbildung des Messempfängers zur Zeitaufzulösung von Signalen bevorzugt, die vom ersten, zweiten und dritten Messsendestrahlfächer hervorgerufen werden und aus der Zeitsignatur vom ersten zum zweiten und vom zweiten zum dritten Empfangssignal auf eine Höhe zu schließen.

Es ist weiter bevorzugt, wenn überdies ein Mittel zur Bestimmung eines Messstrahl-Nullwinkeldurchgangs vorgesehen ist.

Zudem ist bevorzugt, wenn vorgesehen ist, dass das Mittel zur Bestimmung des Messstrahl-Nullwinkeldurchgangs einen Zeitbasissignal- und/oder Nullwinkeldurchgangssignalempfänger umfasst, insbesondere zum drahtlosen Empfang eines für den Nullwinkeldurchgang indikativen Signals.

Überdies ist bevorzugt, wenn das Mittel zur Messstrahl-Nullwinkeldurchgangsbestirnrnung zudem ein Strahlmodulations-/-demodulationsmittel umfasst.

Es ist weiter bevorzugt, wenn vorgesehen ist, dass das Mittel zur Messstrahl-Nullwinkeldurchgangsbestimmung einen Zeitgeber sowie ein Mittel zur Rotationsfrequenzfestlegung, das heißt Messung und/oder Vorgabe derselben, umfasst.

Zudem ist bevorzugt, wenn ein Mittel vorgesehen ist, um aus dem Abstand zum Messsender (r) und die Bezugnahme auf die Winkelkoordinate relativ zum Messstrahl-Nullwinkeldurchgang (phi) kartesische Koordinaten (x, y) zu bestimmen.

Es ist darüberhinaus bevorzugt, wenn ein Mittel zur Speicherung einer Vielzahl sukzessiver aufgenommener Koordinaten vorgesehen ist.

Zudem ist bevorzugt, wenn vorgesehen ist, dass der Messempfänger zumindest ein orts- und/oder positionsempfindliches Element aufweist.

Darüberhinaus ist bevorzugt, wenn weiter vorgesehen ist, dass der Messempfänger zumindest ein lichtempfindliches Element aufweist, welches an einen Lichtleiter angekoppelt ist, welcher zur seitlichen Einkopplung von Licht ausgebildet ist, wobei insbesondere auf beiden Enden des Lichtleiters je zumindest ein lichtempfindliches Element vorgesehen ist.

Es ist weiter bevorzugt, wenn vorgesehen ist, dass eine Signalstärkenauswerteschaltung vorgesehen ist, um aus den Signalverhältnissen an den lichtempfindlichen Elementen und/oder den positionsempfindlichen Elementen auf die Lage (Höhe) des Auftreffpunktes zu schließen.

Überdies ist bevorzugt, wenn vorgesehen ist, dass der Lichtleiter mit einem Streumittel zur Einkopplung der Messstrahlen durch Streuung ausgestattet ist.

Bevorzugt ist auch, wenn weiter vorgesehen ist, dass das Streumittel zur Einkopplung der Messsendestrahlen eine Streufläche, Beschichtung, Umhüllung oder Aufrauhung einer Grenzfläche des Lichtleiters umfasst.

Es ist weiter bevorzugt, wenn vorgesehen ist, dass das Streumittel zur Einkopplung der Messsendestrahlen in den Lichtleiter eingebrachte Streupartikel umfasst.

Darüberhinaus ist bevorzugt, wenn weiter vorgesehen ist, dass der Messempfänger mindestens zwei Messsendestrahldetektoren aufweist und ein Mittel zur Bestimmung der Ausrichtung des Messempfängers zu einer Referenzebene, insbesondere der Rotationsebene des Messsenders vorgesehen ist.

Bevorzugt ist zudem, wenn vorgesehen ist, dass der Messempfänger mit einem Mittel zur Bestimmung von Richtung und Entfernung des Messempfängers relativ zu einem vorgegebenen Sollpunkt vorgesehen ist.

Es ist weiter bevorzugt, dass ein Mittel vorgesehen ist, um aus der gemessenen Position der Messsendestrahldetektoren und deren Lage innerhalb des Messempfängers auf die Position eines ausgezeichneten Punktes, der sich in fester räumlicher Beziehung zum Messempfänger befindet, zu schließen.

Darüberhinaus ist bevorzugt, wenn vorgesehen ist, dass ein Mittel zum Antasten und/oder Markieren eines Mess-/Zielpunktes am Messempfänger als ausgezeichneter punkt ausgebildet ist, insbesondere eine Antastspitze.

Zudem ist bevorzugt, wenn vorgesehen ist, dass der Messempfänger Inertialsensoren zur quasi-kontinuierlichen Positionsbestimmung enthält.

Weiter ist bevorzugt, wenn zudem vorgesehen ist, dass der Messempfänger ein Mittel zur Kompensation auf eine Schräghaltung enthält.

Es ist darüberhinaus bevorzugt, wenn wenigstens ein Messsender vorgesehen ist, der zumindest einen, einen Bereich überstreichenden Strahl emittiert und ein Mittel zur ortsfesten Aufstellung während eine= Messreihe umfasst, und einem während der Aufnahme einer Messreihe beweglichen Messempfänger, der mehrere voneinander beabstandete Messsendestrahldetektoren aufweist, wobei ein Mittel vorgesehen ist, um aus der Zeitsignatur des Messstrahlempfanges an den verschiedenen Messsendestrahldetektoren auf die Entfernung zu einem Referenzpunkt zu schließen.

Überdies ist bevorzugt, wenn vorgesehen ist, dass der Messempfänger ein Mittel zur Kompensation auf eine Schräghaltung enthält.

Bevorzugt ist auch, wenn weiter vorgesehen ist, dass der Messempfänger mindestens drei zumindest im wesentlichen parallel angeordnete positionsempfindliche Messsendestrahldetektoren aufweist und ein Mittel zur Emission eines kollimierten Messsendestrahls vorgesehen ist.

Darüberhinaus ist bevorzugt, wenn ein Mittel zur Bestimmung eines Messstrahl-Nullwinkeldurchgangs vorgesehen ist und eine Einrichtung, um aus dem gemessenen Abstand zum Messsender (r) und die Bezugnahme auf die Winkelkoordinate relativ zum Messstrahl-Nullwinkeldurchgang (phi) auf die Position des Messempfängers zu schließen.

Es ist weiter bevorzugt, wenn am Messempfänger ein Mittel vorgesehen ist, um nach Aufnahme einer ersten Messreihe und dem Versetzen des Messsenders auf eine zweite Aufstellungsposition die Aufnahme einer zweiten Messreihe an den gleichen Messpositionen zu erlauben und unter Berücksichtigung des Abstandes beider Messscnderpositionen eine Bestimmung der Positionen aus den Messpunkten beider Messreihen vorzunehmen.

Zudem ist bevorzugt, wenn überdies ein zweiter funktionsgleicher, insbesondere unterscheidbarer und vom ersten Messsender beabstandeter Messsender vorgesehen ist und der Messempfänger zum Empfang beider Messsender ausgerüstet ist.

Es ist überdies bevorzugt, wenn vorgesehen ist, dass der Messempfänger ein Mittel umfasst, um unter Berücksichtigung des Abstandes beider Messsender eine Positionsbestimmung von Messpunkten vorzunehmen.

Darüberhinaus ist bevorzugt, wenn vorgesehen ist, dass die Messanordnung zur Positionsbestimmung aus mindestens einem Messsender besteht, der zumindest einen, einen Bereich überstreichenden Messstrahl emittiert, und einem davon beabstandeten Messempfänger, der dazu ausgebildet ist, mit Hilfe eines Messstrahldetektors den Messstrahl zu empfangen, sowie einer Auswerteeinheit, die dazu ausgebildet ist, das Auftreffen eines Messstrahls auf dem Messstrahldetektor zeit- und wertdiskret derart aufzulösen, dass mehr als zwei Amplituden-Quantisierungsstufen unterscheidbar sind, und aus den quantisierten Messsignalen auf den Strahldurchgangszeitpunkt zu schließen.

Weiter ist bevorzugt, wenn zudem vorgesehen ist, dass die Auswerteeinheit zur Zeit- und Amplitudendiskretisierung wenigstens einen Analog-/Digitalwandler aufweist.

Es ist überdies bevorzugt, wenn ein Mittel vorgesehen ist, um aus dem zeit- und wertdiskret aufgelösten Messstrahlempfangssignal auf den zeitlichen Schwerpunkt des Strahldurchgangs zu schließen.

Es ist darüberhinaus bevorzugt, wenn bei dem Verfahren zur Messung von Entfernungen vorgesehen ist, dass zumindest zwei sich in einer Drehachse nicht schneidende Strahlen in bekannter Weise um die Drehachse drehend emittiert werden, an einem Detektormittel eine zu einer Erfassung beider Strahlen gehörige Zeitsignatur bestimmt wird und aus der Zeitsignatur die Entfernung des Detektormittels von der Drehachse bestimmt wird.

## Patentansprüche

**1.** Signalverarbeitungsschaltkreis für einen Lichtempfänger mit zumindest einer photoempfindlichen Komponente zum wiederholten Empfang eines Lichtstrahls, wobei der Signalverarbeitungsschaltkreis dazu angepasst ist, ein Signal zu empfangen, das aus der photoempfindlichen Komponente hergeleitet ist, und den Empfang eines Lichtstrahls auf der photoempfindlichen Komponente zu bestimmen und einen Analog-Digital-Wandler zum Quantisieren eines von der photoempfindlichen Komponente hergeleiteten Signals auf zeit- und wertdiskrete Weise und zur Erzeugung eines darauf bezogenen digitalen Datenstroms umfasst, wobei der Signalverarbeitungsschaltkreis weiter dazu angepasst ist, Details des Strahlempfangs auf der photoempfindlichen Komponente aus dem quantisierten Signal zu bestimmen.

**2.** Signalverarbeitungsschaltkreis von Anspruch 1, **dadurch gekennzeichnet, dass** er dazu angepasst ist, die Durchgangszeit des Strahldurchgangs, insbesondere unter Bestimmung des zeitlichen Schwerpunkts des Strahldurchgangs und/oder, bei Ausgestaltung der zumindest einen photoempfindlichen Komponente als positionsempfindliche, photoempfindliche Komponente, die exakte Auftreffposition des Strahls auf der photoempfindlichen Komponente im Ansprechen auf den digitalen Datenstrom zu bestimmen.

**3.** Signalverarbeitungsschaltkreis nach einem der vorhergehenden Ansprüche, der dazu angepasst ist, bei wiederholtem Empfang eines rotierenden Strahls auf der photoempfindlichen Komponente den Nullwinkel-Durchgang zu bestimmen und/oder einen Winkel relativ zu einem Nullwinkel bei Strahlempfang.

**4.** Signalverarbeitungsschaltkreis nach einem der vorhergehenden Ansprüche, **dadurch gekennzeichnet, dass** der Signalempfänger dazu angepasst ist, die Lage eines empfangenen Strahls relativ zu einer Referenzebene zu bestimmen.

**5.** Signalverarbeitungsschaltkreis nach einem der vorhergehenden Ansprüche, **dadurch gekennzeichnet, dass** er zur Auswertung der Signale von zumindest drei, eine positionsempfindliche Anordnung bildenden Photosensoren ausgebildet ist, worin der Signalverarbeitungsschaltkreis dazu angepasst ist, aus den Photosensoren hergeleitete Signale analog-digital zu wandeln und zu quantisieren, um den Strahldurchgang und/oder einen Strahlauftreffpunkt zu bestimmen, wobei insbesondere die Photosensoren in einer Ebene angeordnet sind, um ein positionsempfindliches Signal zu ergeben.

**6.** Signalverarbeitungsschaltkreis nach einem der vorhergehenden Ansprüche, **dadurch gekennzeichnet, dass** er zur Bestimmung eines Nullwinkeldurchgangs eines rotierenden Strahls, der wiederholt auf die photoempfindliche Komponente trifft, ein Strahldemodulationsmittel umfasst und die photoempfindlichen Komponenten zum Empfang eines modulierten Strahls ausgebildet sind.

**7.** Signalverarbeitungsschaltkreis nach einem der vorhergehenden Ansprüche, **dadurch gekennzeichnet, dass** zum Empfang von Strahlen aus mehreren funktionsgleichen, unterscheidbaren und beabstandeten Messsendern zumindest eine photoempfindliche Komponente ausgebildet und der Signalverarbeitungsschaltkreis zur Unterscheidung der Strahlen ausgebildet ist, insbesondere auf Basis einer Zeitsignatur der Lichtstrahlen.

**8.** Messsystem mit einem Signalempfänger nach einem der vorhergehenden Ansprüche und mit einem Signalgenerator zum Aussenden von zumindest einem Signalstrahl, welcher auf definierte Weise über eine Oberfläche streicht, wobei der Signalempfänger dazu angepasst ist, den Strahlempfang zeitlich aufzulösen und aus der Zeitempfangssignatur eine räumliche Information über die relative Anordnung des Signalempfängers zum Signalgenerator zu bestimmen.

**10.** Messsystem nach dem vorhergehenden Anspruch, **dadurch gekennzeichnet, dass** zumindest zwei Signalstrahlen emittiert werden, die rotieren und sich in der Rotationsachse nicht schneiden.

**11.** Messsystem nach dem vorhergehenden Anspruch, worin die Strahlachsen relativ zueinander fest sind und/oder einen gleichen Winkelabstand haben.

**12.** Messsystem nach einem der vorhergehenden Messsystemansprüche, worin der Signalgenerator dazu ausgebildet ist, zumindest einen Strahlfächer zu emittieren.

**13.** Messsystem nach dem vorhergehenden Anspruch, **dadurch gekennzeichnet, dass** der Signalgenerator zumindest zwei Signalfächer emittiert, insbesondere parallel zueinander.

**14.** Messsystem nach dem vorhergehenden Anspruch, worin ein dritter Signalfächer quer zu den zwei anderen Signalfächern emittiert wird, wobei die ersten zwei Signalstrahlfächer allgemein parallel zueinander angeordnet sind und der dritte Signalfächer weder exakt parallel noch senkrecht auf eine Drehachse der rotierenden Fächer angeordnet ist.
